# EUROPEAN PATENT APPLICATION

(11) **EP 2 703 509 A1**
(43) Date of publication of application: **05.03.2014**
(21) Application number: 12182083.1
(22) Date of filing: 28.08.2012
(51) Int. Cl.: C22C 33/06, C22C 38/00, C22C 38/04, C22C 38/06, C22C 38/32, C22C 38/54

(54) **TiC- and TiB2-Particles reinforced high strength and low density steel with improved E-modulus and method for producing said steel**

(71) Applicant: Tata Steel Nederland Technology B.V., 1970 CA IJmuiden (NL)
(72) Inventor: Liu, Cheng, 1970 CA IJmuiden (NL)
(74) Representative: Bodin, Andre

(57) **Abstract**

The invention relates to TiC- and TiB₂-particles reinforced high strength and low density steel with increased E-modulus and to a method for producing said steel and to a method for producing said steel.

## Description

The invention relates to TiC- and TiB₂-particles reinforced high strength and low density steel with increased E-modulus and to a method for producing said steel.

In the automotive industry, where lighter vehicles and safety are of constant concern, steel with a higher E-modulus allows the use of thinner gauge parts which still have the stiffness of thicker and thus heavier parts. In addition, a steel having a low density can reduce weight of parts at the same thickness. Also in other types of applications such as in yellow goods, construction and engineering etc. the combination of high E-modulus, low density, and high strength is very beneficial. A known way to increase the modulus of elasticity and reduce the density of steel is by incorporating ceramic particles of different natures, such as carbides, nitrides, oxides or borides. These particles have a much higher elastic modulus, ranging from about 300 to 550 GPa, than that of the steel base which has an E-modulus of around 205-210 GPa.

One way of including ceramic particles uniformly distributed in a matrix of steel is by means of powder metallurgy. Despite improved mechanical properties in comparison with conventional steels containing no dispersion of ceramic particles, powder metallurgy has restrictions. Reactions of the metal powders are difficult to prevent because of the high surface area of the metal powders. Even after compacting and sintering, there may be residual porosity that may play a role in inducing fracture during cyclic loading. Uniform distribution of the particles in the matrix is difficult to achieve. Moreover the chemical composition of interfaces matrix/particle, and therefore their cohesion is difficult to control because of the surface contamination of the powders before sintering. In addition, the cost of the process like power metallurgy is very high. Powder metallurgy process is therefore potentially suitable for production in small quantities but is not economic for production on the scale required for the automotive and construction industry.

In EP1897963 a steel is proposed based on the formation of large quantities of titaniumdiboride particles (TiB₂). It describes steel comprising 2.5 to 7.5% titanium and about 0.8 to about 4% boron. The result of these additions is that large numbers of TiB₂-particles may be formed in the steel matrix and these particles leads to increase of the E-modulus and decrease of the density of the steel. The density of the particles is about 4520 kg/m³ and for steel this is about 7800 kg/m³. The E-modulus of TiB₂ is 565 GPa, whereas steel has about 205-210 GPa. A disadvantage of this steel type is that it is very difficult to produce the TiB₂-precipitates as fine particles if too high an amount of Ti and B are added. Because of the addition of a large amount of B, the cost of this type steel is quite high. A similar solution is chosen in JP2007-051341 where the mandatory presence of large amounts of titanium and vanadium is complemented by a mandatory presence of large amounts of chromium to produce and stabilise the formation of V₃B₄ making the costs of the alloy very high. Because of the addition of a large amount of V, the steel is very costly for many applications.

It is an object of this invention to provide a steel product with a higher E-modulus than conventional steels.

It is also an object of this invention to provide a steel product that is more economic than steel with TiB₂ or vanadium containing borides

It is also an object of this invention to provide a method of mass producing the steel product of the invention in an economical way.

One or more of these objects are reached by a steel comprising in wt. %
- 0.21 ≤ C <1.5
- 4.0 ≤ Ti < 12.0
- 1.5 ≤ B < 3.0
- 0.1 ≤ Mn < 3.0
- 0.01 ≤ Al < 0.5
- 0 ≤ Cr < 1.0
- 0 ≤ Si < 1.0
- 0 ≤ Ni < 1.0
- 0 ≤ Cu < 1.0
- 0 ≤ Mo < 0.5
- 0 ≤ W < 0.5
- 0 ≤ Nb < 0.5
- 0 ≤ V < 0.5
- 0 ≤ S < 0.030
- 0 ≤ P < 0.040
- 0 ≤ N < 0.04
- remainder iron and inevitable impurities;
wherein the structure of the steel comprises at least 5 wt% of ∑ (TiC and TiB₂)-particles, and wherein -0.30 <= Ti-2.22*B-((48/12)*C) <=0.15, and wherein 2.22*B <= Ti.

All compositional percentages are in weight percent (wt.%) unless otherwise indicated. The unavoidable impurities are elements unavoidably contained in the steel due to circumstances such as raw materials, manufacturing facilities, etc.

Carbon is an important element for forming TiC-particles. Together with Ti amount of carbon determines the volume fraction of TiC-particles. Below the lower end of the inventive range the contribution of TiC-particles to the E-modulus is insufficient. On the other hand, if the content of carbon exceeds 1.5%, the volume fraction of TiC-particles is too high which has a negative impact on ductility and workability.

**Titanium** is an important element for forming TiC- and TiB₂-particles. TiC- and TiB₂-particles raise the E-modulus of the steel. Below the lower end of the inventive range the contribution of the TiC- and TiB₂-particles to the E-modulus is insufficient. The Titanium content is at least 4.0%. If the titanium content exceeds 12% the volume fraction of TiC- and TiB₂-particles is too high which has a negative impact on ductility and workability.

**Boron** is an important element for forming TiB₂-particles. Below the lower end of the inventive range the contribution of the TiB₂-particles to the increase of the E-modulus is insufficient. In an embodiment of the invention the boron content is at least 1.5%. On the other hand, if the content exceeds 3.0% the volume fraction of TiB₂-particles is too high which has a negative impact on ductility and workability.

**Manganese** contributes to the strengthening of the matrix by solid solution and increasing quenching-hardening-ability of steels. Manganese is also effective in binding sulphur thereby reducing the risk of hot-cracking during hot rolling. However the amount of Mn above 3% increases the risk of segregation and band formation to an unacceptable level. The minimum the manganese content is 0.1%.

**Chromium** is an element effective in increasing quenching-hardening-ability of steel and the strength of the matrix. Too high Cr increases the cost of steel and an excessive addition of Cr leads to precipitate (Fe, Cr)-borides which is not desirable in the context of this invention. Therefore the chromium content is therefore preferably below 1%. When present as an alloying element then a suitable minimum amount is 0.05% and preferably 0.1%.

**Aluminium** is added mainly for deoxidation. An amount of about or higher 0.005% is effective in the deoxidation of the melt. On the other hand, high Al-contents result in deterioration in ductility and castability due to the formation of harmful coarse alumina inclusions. Therefore the maximum content should not exceed 0.5%.

**Silicon** is an element increasing strength of steel. However, a Si-content of more than 1% will negatively affect surface quality of steel and galvanisability of steel products. Therefore the Si-content should be preferably below 1.0%.

**Nitrogen** is an impurity element that consumes Ti to form TiN and should be kept as low as possible. Although the maximum allowable nitrogen content is 0.040% (400 ppm), the nitrogen should preferably be controlled below 0.020%.

**Tungsten** is an element having the same function as Ti for forming (TiW)C. Presence of W replaces part of Ti in TiC and increases the E-modulus of TiC-particles. However addition of too high W is not economic and should therefore be limited to 0.5%. If W is present as an optional alloying element then a suitable minimum amount is 0.05% and preferably 0.1%.

**Niobium** has a similar working as Ti and can replace part of Ti in TiC. However, Nb is much more costly than Ti and should therefore be limited to 0.5%. When present as an alloying element then a suitable minimum amount is 0.03% and preferably 0.05%.

**Vanadium** has a similar working as Ti and can replace part of Ti in TiC. However, V is much more costly than Ti and should therefore be limited to 0.5%. When present as an alloying element then a suitable minimum amount is 0.05% and preferably 0.1%.

If **Sulphur** is present in amounts exceeding 0.030%, then the risk of MnS formation becomes too great. MnS is known to adversely affect hot and cold formability.

**Phosphorus** segregates at the grain boundaries. To maintain sufficient hot ductility and avoid hot-cracking during solidification and welding the amount should not exceed 0.040%.

Optionally, **nickel, copper** and **molybdenum** can be added which increase the strength of the steel matrix and quenching-hardening-ability. For economic reasons, the additions should be limited to 1%, 1% and 0.5% by weight respectively.

In an embodiment the E-modulus of the steel is at least 230 GPa, preferably at least 235 GPa. This is achieved by producing more TiC and TiB₂-particles in the steel matrix. In an embodiment the structure of the steel comprises at least 5 wt.% of TiC- and TiB2-particles, more preferably at least 7 wt.%.

In an embodiment the precipitates have an average size of below 10 µm. preferably the average size is below 5 µm.

According to a second aspect, a method is provided for producing the steel as claimed in any one of claims 1 to 4. A big advantage is that according to this method the steel according to the invention can be mass produced using conventional steel making equipment. Preferably the steel melt from which the steel according to the invention is made by using Ferro-alloys, and not by powder metallurgy. This makes the steel much easier to produce in mass, and thereby more economically.

According to a third aspect the steel according to the invention is used in static constructions such as sections, bridges or bridge parts, buildings, in vehicles such as cars, yellow goods, trucks, or aerospace applications. In automotive applications such as vehicles this type of steel can be applied for example in brakes, suspension components, shock mounts, roof bows, and vehicle floors. In aerospace applications one of the possible applications are gears and bearings etc., in construction the structural steels for sections. For yellow goods the possible applications are e.g. boom and bucket arm structures on backhoes and excavators.

The invention is now further explained by means of the following, non-limitative example.

Two melts were made from very low carbon steel scraps, graphite, Ferro-Ti alloy and Ferro-B alloy with addition of relevant alloying elements. The melts were cast into ingots. The chemical compositions of the casts are given in Table 1.

**Table 1. Chemical composition of experimental casts (wt.% unless otherwise specified).**

| Steel | C | Ti | B | Mn | Al | N (ppm) |
|---|---|---|---|---|---|---|
| 1 | 0.3 | 6.45 | 2.36 | 0.2 | 0.1 | 50 |
| 2 | 0.05 | 0.005 | 0.001 | 0.2 | 0.1 | 50 |

The ingots were reheated up to 1250°C and soaked for 1 hour and then hot rolled to 4mm gauge. Finishing rolling temperature was higher than 870°C. After hot rolling, hot rolled plates were coiled at 700°C.

The percentage of TiC and TiB₂ (in wt.%) and the E-modulus (tensile specimens were taken out parallel to the rolling direction) are given in Table 2.

**Table 2. TiC and TiB₂ (in wt.%) and E modulus for experimental steels**

| Steel | TiC (wt.%) | TiB₂ (wt.%) | E (GPa) | Density (kg/m3) |
|---|---|---|---|---|
| 1 | 1.5 | 7.6 | 248 | 7350 |
| 2 | 0.0 | 0.0 | 205 | 7800 |

## Claims

1. Steel having a chemical composition consisting of
• 0.21 ≤ C < 1.5
• 4.0 ≤ Ti < 12.0
• 1.5 ≤ B < 3.0
• 0.1 ≤ Mn < 3.0
• 0.01 ≤ Al < 0.5
• 0 ≤ Cr < 1.0
• 0 ≤ Si < 1.0
• 0 ≤ Ni < 1.0
• 0 ≤ Cu < 1.0
• 0 ≤ Mo < 0.5
• 0 ≤ W < 0.5
• 0 ≤ Nb < 0.5
• 0 ≤ V < 0.5
• 0 ≤ S < 0.030
• 0 ≤ P < 0.040
• 0 ≤ N < 0.04
• remainder iron and inevitable impurities;
wherein the structure of the steel comprises at least 5 wt% of ∑ (TiC and TiB₂)-particles, and wherein -0.30 <= Ti-2.22*B-((48/12)*C) <=0.15, and wherein 2.22*B <= Ti.

2. Steel according to claim 1 wherein the E-modulus is at least 230GPa, preferably at least 235GPa.

3. Steel according to any one of claims 1 to 2 wherein the structure of the steel comprises at least 5 wt% of TiC- and TiB₂-particles, more preferably at least 7wt.%.

4. Steel according to any one of claims 1 to 3 wherein the particles have an average size of below 10 µm, preferably below 5 µm.

5. Method for producing the steel of any one of claims 1 to 4 comprising the steps of:
a: providing a steel melt having a composition
o 0.21 ≤ C < 1.0
o 4.0 ≤ Ti < 12.0
o 1.5 ≤ B < 3.0
o 0.1 ≤ Mn < 3.0
o 0.01 ≤ Al < 0.5
o 0 ≤ Cr < 1.0
o 0 ≤ Si < 1.0
o 0 ≤ Ni < 1.0
o 0 ≤ Cu < 1.0
o 0 ≤ Mo < 0.5
o 0 ≤ W < 0.5
o 0 ≤ Nb < 0.5
o 0 ≤ V < 0.5
o 0 ≤ S < 0.030
o 0 ≤ P < 0.040
o 0 ≤ N < 0.04
o remainder iron and inevitable impurities and wherein -0.30 <= Ti-2.22*B-((48/12)*C) <=0.15, and wherein 2.22*B <= Ti
b. casting the melt into a suitable starting material for hot rolling by casting an ingot or bloom or by casting a slab, rod or thin slab, or by casting a strip;
c. heating, reheating or homogenising the ingot, bloom, slab, rod or strip before hot rolling with a controlled heating rate so as to avoid decohesion between the matrix and the at least 5 wt% of ∑(TiC and TiB₂)-particles;
d. hot rolling the starting material to the finish hot rolling dimensions;
d. wherein the finished hot rolled steel comprises at least 5 wt% of ∑(TiC and TiB₂)-particles,

6. Method according to claim 5 wherein the hot rolling temperature is above Ar₃ and or the coiling temperature after hot rolling is between 500 and 750°C.

7. Method according to any one of claims 5 to 6 wherein the steel melt is produced by using Ferro-alloys.

8. Method according to any one of claims 5 to 7 wherein the hot rolled steel is subsequently subjected to cold rolling to further reduce the gauge of the material and annealed at the temperature suitable to recrystallise the grain structure.

9. Method according to any one of claims 5 to 7 wherein the steel is provided with a metallic coating to increase corrosion resistance.

10. Method according to claim 9 wherein the metallic coating is a zinc or zinc alloy coating, and wherein the coating is applied by electrocoating or hot-dipping

11. Steel part produced from the steel according to any one of claim 1 to 4 for use in static constructions, or in vehicles such as cars, yellow goods, trucks, aerospace applications or in other engineering applications.
